# EUROPEAN PATENT APPLICATION

(11) **EP 2 251 520 A2**
(43) Date of publication of application: **17.11.2010**
(21) Application number: 10380058.7
(22) Date of filing: 21.04.2010
(51) Int. Cl.: E06B 3/964

(54) **Attachment element for the assembly of a subframe**

(30) Priority: 13.05.2009 ES 200930091 P
(71) Applicant: Kriket Armazones S.L., 48170 Zamudio Vizcaya (ES)
(72) Inventor: Ibarrondo Medina, Alberto, 48170 Zamudio Vizcaya (ES)
(74) Representative: De Pablos Riba, Julio

(57) **Abstract**

The invention relates to an attachment element for the assembly of subframes in sliding doors with which the immobilization of the assembly and the positioning of the components in a right angle are assured without the intervention of other external elements. The attachment element of the invention is formed by a first base part, with a general prismatic shape, with an inner quadrangular through hole, a base hole in one of its branches, and a side hole for securing this part to the crosspiece of the subframe; a rotational part, formed from a cylindrical body which is finished at a first end in a frustoconical portion sized to pass through the base hole of the first base part, and at the opposite end in respective protruding rectangular portions; and a support part, prepared to be incorporated at the end of the post, and having an aperture prepared to allow the passage of the end of the rotational part provided with said projecting rectangular formations, and allow the linking thereof with the base part by means of the rotation of the rotational part.

## Description

### Object of the Invention

The present invention relates to an attachment element to be used in assemblies of subframes in sliding doors.

### Background of the Invention

Finishing partitions and walls in the areas of openings with a subframe intended for the subsequent installation of a frame, for the purpose of facilitating the assembly of the latter, is well known in construction. The assembly of said subframe is essential, especially when referring to sliding doors.

To fix the parts forming the subframe, inner connecting parts or fittings are used and securing parts are also used, with the aim of maintaining the assembly immobile and of assuring that the angles are correctly positioned in a right angle. These securing parts can consist of squares or diagonals which must be added to the assembly and removed once the subframe is assembled. Both the assembly and the disassembly of the securing parts can have complications.

The intention is to reduce to a minimum this type of problems involved in the installation of subframes, seeking simplicity in the installation as well as savings in manufacturing and handling costs.

### Description of the Invention

The invention presented below solves the mentioned problems by using minimum material and assuring maximum functionality, convenience and safety in the assembly of subframes.

The invention consists of an attachment element which is used in subframes of sliding doors and serves to attach the crosspiece with each post, such that it assures the correct position of the angles between the crosspiece and the post and furthermore provides stability when assembling the subframe and quickness in the installation. It also allows an easy disassembly in the event of an error as well as ease in being assembled again.

The attachment element is formed by three parts and is made of hard and flexible material.

The first part, or base part, consists of a quadrangular prism which has a rectangular hole which traverses the part from one face towards the opposite face and which will be referred to as central hole. This part of the attachment element also has a circular hole which goes from one of the bases to the rectangular hole and which will be referred to as base hole. It furthermore has a hole in one of the faces where the central hole is positioned, which will be referred to as side hole.

The second part, or rotational part, is a part in the form of a cylinder, finished in a truncated cone at one of its ends and in two outward opposite rectangular elements at the other end. This second part of the attachment element has a groove along its central axis, until the line which is formed by two of the sides in the rectangular elements, and which divides the truncated cone and a segment of the cylinder into two identical and symmetrical parts with respect to the section plane and with a certain separation between both. This part is introduced in the circular hole of the base. The end of the truncated cone projects through the central hole, being secured therein, the two parts thus being attached. Upon being introduced in the base hole, the groove of the cut makes the two halves come together and makes it able to pass easily through the hole. Once it has passed through said hole, the two halves are separated and the base of the truncated cone prevents it from coming out.

The third part, or support part, is a planar rectangular element in the central part of which it has a hole with a figure similar to the cross-section of the rotational part in the area encompassing the two rectangular parts and the cylindrical part, but with a slightly larger size. This part is attached to the post of the subframe and in each post there will be one.

After the first two parts of the attachment element have been attached, this assembly is assembled in the crosspiece, one being placed at each end, the base part being concealed therein and the rotational part being at the outside at the area of the cylinder and the rectangular elements. The assembly is secured to the crosspiece by means of a screw traversing said crosspiece and the side hole.

At the time of assembling the subframe, the crosspiece and the vertical posts are attached. The protruding parts of the rotational part project from the crosspieces, traversing the support part located in the posts. The rotational part is then rotated to entrap the post, both posts thus being fitted to the crosspiece.

The base hole can have notches in its length, such that the rotation of the second part of the attachment element allows distinguishing positions.

The features and advantages of the invention will be seen more clearly from the following detailed description of a preferred embodiment, given only by way of a non-limiting illustrative example, with reference to the attached figures.

### Brief Description of the Drawings

Figure 1 shows the base part.
Figure 2 shows the rotational part.
Figure 3 shows the base part and rotational part assembly.
Figure 4 shows the support part.
Figure 5 shows a top view of the rotational part.
Figure 6 shows the support part located in the upper part of the post.
Figure 7 shows the base part and rotational part assembly in the crosspiece.
Figure 8 shows the attachment between the crosspiece and the post.
Figure 9 shows the projecting part of the rotational part.
Figure 10 shows the position of the rotational part entrapping the post.

### Description of a Preferred Embodiment

The detailed description of a preferred embodiment of the invention will be carried out below with the aid of the attached drawings, in which the same reference numbers are used to designate identical or similar parts, and takes into account the explanation of the invention set forth.

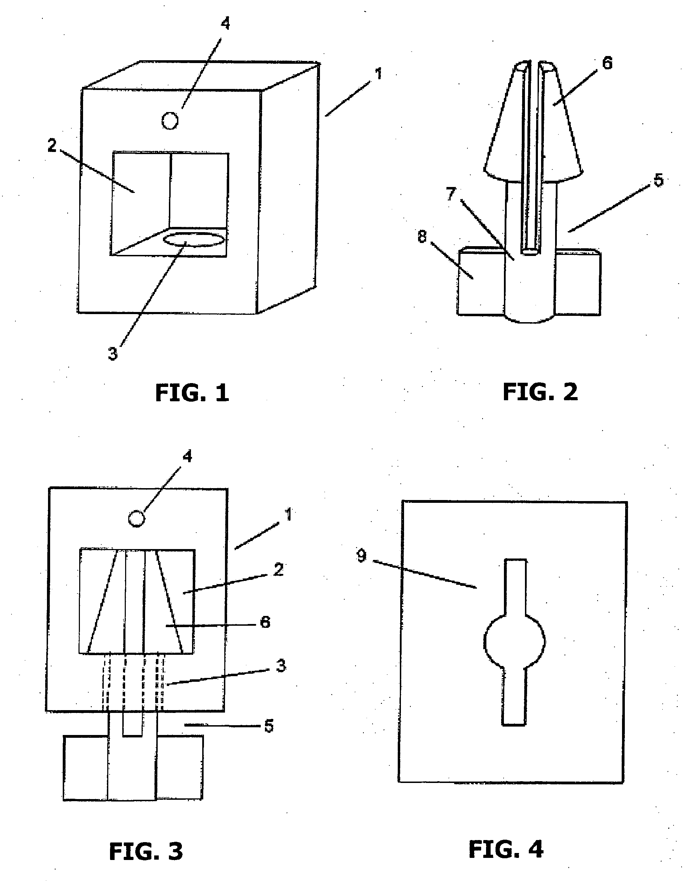

Figure 1 shows the base part (1) formed by a quadrangular prism having the central hole (2) which is a rectangular cavity which traverses the part from one face towards the opposite, also having a base hole (3) which goes from one of the bases to the central hole (2) and furthermore having a side hole (4) in one of the faces where the central hole (2) is positioned.
Figure 2 shows the rotational part (5), having the shape of a cylinder (7), finished in a truncated cone (6) at one of its ends and in two protruding rectangular elements (8) at the other end. The rotational part (5) has a groove along its central axis, until reaching the height of the protrusions (8), and which divides the cone (6) and a segment of the cylinder (7) into two identical and symmetrical parts with respect to the section plane and with a certain separation between both.
Figure 3 shows the base part (1) and rotational part (5) assembly. This rotational part (5) is introduced in the circular hole (3). The end of the cone (6) projects inside the central hole (2), being secured therein, the base part (1) and the rotational part (5) thus being attached. Upon being introduced in the base hole (3), the groove of the cut of the rotational part (5) makes the two halves come together and makes it able to pass easily through the base hole (3). Once it has passed through it, the two halves are separated and the base of the cone (6) acts as a stop and prevents the rotational part (5) from coming out.
Figure 4 shows the third part of the attachment element, which is the support part (9), in the central part of which it has a hole with a figure similar to the cross-section of the rotational part (5) seen in Figure 2.

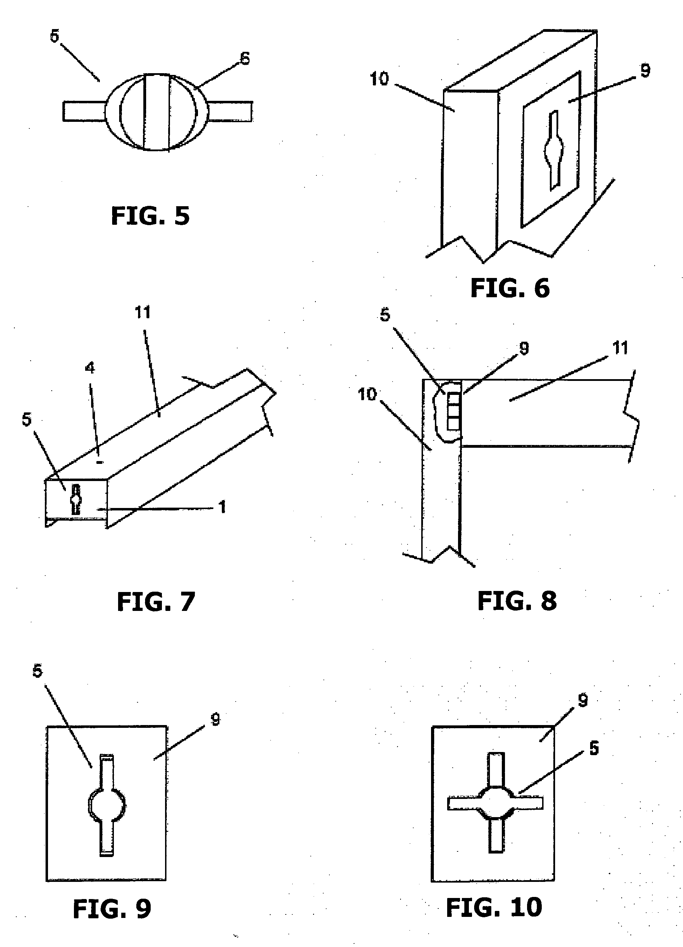

Figure 5 shows a top view of the rotational part (5) in which the shape of the cone (6) is seen, the lower base being an ellipse.
Figure 6 shows the support part (9) placed in the upper part of the post (10).
Figure 7 shows the base part (1) and rotational part (5) assembly in the crosspiece (11). Both parts are secured to the crosspiece by means of a screw traversing the side hole (4) of the base part (1).
Figure 8 shows the attachment between the crosspiece (11) and the post (10). By means of a cut in the figure of the crosspiece it can be seen that the rotational part (5) traverses the support part (9) placed in the post (10).
Figure 9 shows the protruding part of the rotational part (5) which traverses the support part (9).
Figure 10 shows the position of the rotational part (5), once rotated, and its new position with respect to the support part (9).

It must be understood that the invention has been described according to a preferred embodiment thereof, therefore it can be susceptible of modifications provided that this does not entail any alteration of the essence of said invention, such modifications being able to affect the shape, size or manufacturing materials.

## Claims

1. An attachment element for the assembly of a subframe, **characterized in that** it is formed by three parts and is made of a hard and flexible material, the first part being the base part (1), consisting of a quadrangular prism having a rectangular hole referred to as central hole (2) which traverses the base part (1) from one face to the opposite face, also having a circular hole which goes from one of the bases to the central hole (2) and which is referred to as base hole (3), and furthermore having a hole in one of the faces where the central hole (2) is positioned, which is referred to as side hole (4), the second part being the rotational part (5) which has the shape of a cylinder (7) finished in a truncated cone (6) at one of its ends and in two protruding rectangular elements (8) at the other end, having a groove along its central axis, until reaching the height of the protrusions (8), and dividing the cone (6) and a segment of the cylinder (7) into two identical and symmetrical parts with respect to the section plane and with a certain separation between both, the third part being the support part (9), in the central part of which it has a hole with a figure similar to the cross-section of the rotational part (5).

2. The attachment element for the assembly of a subframe according to claim 1, **characterized in that** the rotational part (5) is introduced in the circular hole (3) such that the end of the cone (6) projects inside the central hole (2).

3. The attachment element for the assembly of a subframe according to claim 1, **characterized in that** the support part (9) is placed at the upper part of the post (10).

4. The attachment element for the assembly of a subframe according to the previous claims, **characterized in that** the base part (1) with the rotational part (5) introduced therein, is assembled in the crosspiece (11) attached thereto by means of a screw traversing the side hole (4) of the base part (1).

5. The attachment element for the assembly of a subframe according to claim 1, **characterized in that** the cone (6) of the rotational part (5) has an ellipse as a lower base.
